# EUROPÄISCHE PATENTSCHRIFT

(11) **EP 0 717 667 B1**
(45) Veröffentlichungstag und Bekanntmachung des Hinweises auf die Patenterteilung: **19.03.1997**
(21) Anmeldenummer: 94926793.4
(22) Anmeldetag: 09.09.1994
(51) Int. Cl.: B21C 37/26, B23Q 37/00

(54) **ANLAGE ZUR HERSTELLUNG VON WÄRMETAUSCHERROHREN**
HEAT EXCHANGER TUBING PRODUCTION PLANT
INSTALLATION DE FABRICATION DE TUBES ECHANGEURS DE CHALEUR

(30) Priorität: 09.09.1993 DE 4330957
(43) Veröffentlichungstag der Anmeldung: 26.06.1996
(73) Patentinhaber: MANNESMANN Aktiengesellschaft, 40213 Düsseldorf (DE)
(72) Erfinder: BRÜHL, Fritz, D-47802 Krefeld (DE); ROMBAUT, Hendrik, D-90300 Destelbergen (DE)
(74) Vertreter: Meissner, Peter E., Dipl.-Ing.
(86) Internationale Anmeldenummer: DE9401081
(87) Internationale Veröffentlichungsnummer: WO9507156

(56) Entgegenhaltungen:
- GB-A- 700 799
- US-A- 3 047 712
- US-A- 3 085 146
- US-A- 4 651 914
- MACHINERY AND PRODUCTION ENGINEERING, Bd.108, 9. Februar 1966, BURGESS HILL GB Seiten 312 - 313 'AMF-Thermatool plant for producing spiral-finned tubing'

## Beschreibung

Die Erfindung betrifft eine Anlage zur Herstellung von metallischen Wärmetauscherrohren gemäß dem Oberbegriff des Patentanspruchs 1.

Derartige Rohre mit schraubenlinienförmig auf der äußeren Oberfläche befestigten Wärmetauschrippen werden auch als Rippenrohre bezeichnet. Für den Einsatz in Dampferzeugeranlagen werden diese Rippenrohre aus Kesselbaustählen hergestellt, wobei die Rippen aus einem flachen Stahlprofil (streifenförmiges Blechband oder gezogenes Profil) gebildet und mit der Rohroberfläche durchgehend oder abschnittweise (z.B. EP 0 031 422 B1) verschweißt sind. Auf diese Art der Rippenrohrherstellung bezieht sich die Erfindung in erster Linie, beschränkt sich jedoch nicht ausschließlich darauf. Sie schließt auch Anlagen zur Herstellung von Rippenrohren aus anderen Metallen wie etwa Kupfer oder Aluminium ein, wobei darüber hinaus für die Rohre und die Rippen auch jeweils unterschiedliche Werkstoffe (z.B. Aluminiumrippen auf Stahlrohr) eingesetzt und andersartige Befestigungsverfahren (z.B. Löten, Schrumpfverbindung, Einwalzen des Rippenfußes in die Rohroberfläche) angewendet werden können (z.B. DE-OS 23 60 477).

Die heute üblichen Anlagen zur Herstellung von Rippenrohren aus Stahlwerkstoffen arbeiten zur Verbindung der Rippen mit der Oberfläche der glatten Rohre nach dem HF-Schweißverfahren, wobei die angewandte Frequenz meistens etwa im Bereich von 400 - 500 kHz liegt. Das über ein Glattrohrbett der Anlage jeweils zugeführte glatte Rohr muß in Relation zu dem zur Bildung der Rippen eingesetzten Flachmaterial in eine schraubenlinienförmige Bewegung versetzt werden, so daß sich das flache Material in radial nach außen abstehenden Windungen dicht um das glatte Rohr legt, das eine metallisch reine Oberfläche aufweist. Hierbei muß vielfach erhebliche Verformungsarbeit geleistet werden, so daß der Antrieb mit einer entsprechend hohen Antriebsleistung ausgestattet sein muß. Hinzu kommt, daß insbesondere bei Rohren für Kesselbauzwecke wegen der gefürchteten Kerbwirkung auf der Oberfläche der Rohre keine Riefen durch angreifende Werkzeuge zur Erzeugung der schraubenlinienförmigen Bewegung entstehen dürfen.

Aus diesen Gründen sind heute üblicherweise die Rippenrohrherstellungs-Anlagen so ausgebildet, daß sie ein einer Drehbank ähnliches Drehfutter aufweisen, mit dem das glatte Rohr an einem Ende sicher gefaßt und in Rotation versetzt werden kann. Um die Schraubenlinienbewegung zu erzeugen, wird der Drehbewegung eine lineare Bewegung in Richtung der Rohrachse (Längsachse) überlagert. Hierzu ist das Drehfutter in einem schlittenartigen Aufnahmegestell gelagert, das auf dem Maschinenbett, dessen Länge der maximal zu fertigenden Rohrlänge entspricht, motorisch verfahrbar ist. Die Drehbewegung und die lineare Bewegung sind in der Regel stufenlos zueinander einstellbar, so daß die Rippenrohre mit beliebiger Teilung (Abstand zwischen zwei benachbarten Rippen) herstellbar sind. Die Zuführung für das Flachmaterial (Bandzuführung) der Rippen und das Schweißaggregat mit den Schweißelektroden sind im Betriebszustand ortsfest, während sich die Dreheinrichtung (Drehfutter mit Schlitten) zusammen mit dem jeweiligen Rohr linear bewegt. Es kann auch die kinematisch umgekehrte Anordnung gewählt werden, bei der das Drehfutter ortsfest gehalten wird und die Bandzuführung auf einem entlang des Maschinenbetts verfahrbaren Schlitten montiert ist (z.B. EP 0 259 607 B1 oder EP 0 303 074 A2).

Rippenrohre für Dampferzeuger weisen Längen von überwiegend 14 - 18 m und vielfach sogar von 22 m auf. Dies führt zu entsprechend langen und schweren Maschinenbetten und damit zu entsprechend hohen Investitionsaufwendungen für derartige Anlagen.

Aus der US 3 047 712 ist es für ein HF-Schweißverfahren zur Rippenrohrherstellung bekannt, die schraubenlinienförmige Bewegung des Rohres durch eine Gruppe über den Rohrumfang verteilter und mit ihren Drehachsen schräg zur Rohrachse gestellten angetriebenen Rollen zu erzeugen, wobei die Steigung der Schraubenlinienbewegung von dem Verhältnis der Rollendrehzahl und dem Schrägstellungswinkel abhängt. Wegen der großen Verformungskräfte bei der Umwicklung des Rohres mit dem Rippenmaterial hat sich dieses Verfahren zumindest bei Stahlwerkstoffen in der Praxis aber nicht bewährt, da die Antriebskräfte sich nur unzureichend übertragen ließen und eine unzulässig starke Riefenbildung auf der Rohroberfläche zu verzeichnen war.

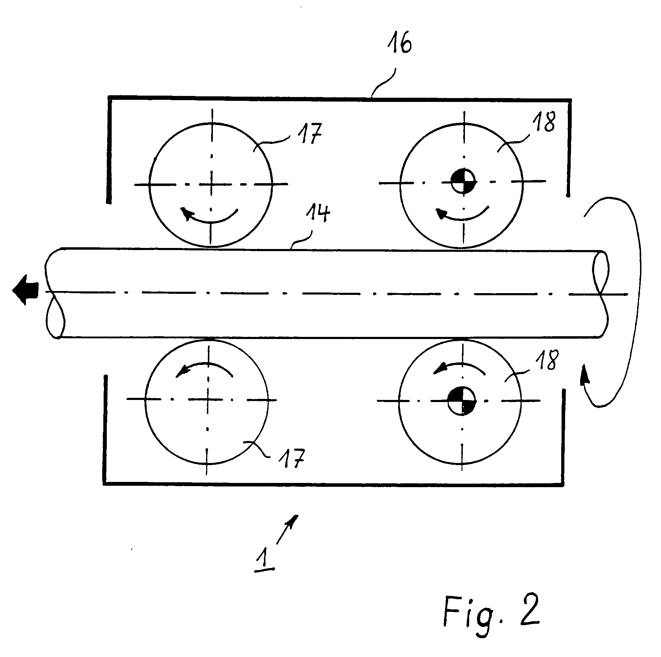

Weiterhin ist es bekannt, anstelle der heute üblichen Antriebseinrichtung mit verfahrbarem Drehfutter eine mit einem ortsfesten drehbaren Käfig ausgestattete Dreheinrichtung zu verwenden, durch die das Rohr hindurchgeführt wird. Das Wirkprinzip geht aus der schematischen Darstellung in Figur 2 hervor. Darin sind das zu drehende Rohr mit 14 und der drehbare Käfig mit 16 bezeichnet. Innerhalb des Käfigs 16 sind zwei Gruppen von um das Rohr 14 verteilt angeordneten und in radialer Richtung zur Erzielung einer ausreichenden Anpreßkraft auf die Rohroberfläche anstellbaren Rollen 17 und 18 befestigt. Die Drehachsen der Rollen 17, 18 liegen jeweils in einer zur Rohrachse senkrechten Ebene. Die Rollen 17 sind nicht angetrieben, sondern können sich mit dem nach links verschiebenden Rohr. 14 frei drehen. Sie haben lediglich die Aufgabe, die Rotationsbewegung des Käfigs 16 um die Rohrachse ohne merklichen Schlupf auf das Rohr 14 zu übertragen. Demgegenüber sind die Rollen 18 (z.B. mittels Elektromotor) angetrieben und bewirken die lineare Bewegungskomponente des Rohres 14. Die Rotationsbewegung des Käfigs 16 und die Drehzahl der Rollen 18 lassen sich z.B. mittels einer mechanischen (stufenloses Getriebe) oder elektrischen Koppeleinrichtung beliebig aufeinander einstellen, so daß Schraubenlinienbewegungen des Rohres 14 mit jeder gewünschten Steigung einstellbar sind.

Der Bedarf an Kesselrohren in Form von Rippenrohren unterliegt extremen Schwankungen, da er vielfach an die Abwicklung von Großprojekten (z.B. Kraftwerksneubau) gebunden ist. Das bedeutet beispielsweise, daß in einem Land im Abstand von 4 - 6 Jahren jeweils ein neues Kraftwerk gebaut wird und hierfür jeweils eine Menge an Rippenrohren benötigt wird, die etwa der Produktion einer Rippenrohranlage in einem Zeitraum von 3 - 4 Monaten entspricht. Es liegt auf der Hand, daß die Investition einer Neuanlage unter solchen Bedingungen in diesem Land aus Kostengründen nicht zu rechtfertigen ist. Auf der anderen Seite haben gerade Entwicklungsländer und Schwellenländer das Bestreben, im Rahmen von Großprojekten einen möglichst großen Anteil der benötigten Bauteile im eigenen Land herstellen zu lassen, um dessen wirtschaftliche Entwicklung zu fördern.

Aufgabe der Erfindung ist es, eine gattungsgemäße Anlage dahingehend weiterzubilden, daß eine Herstellung von Rippenrohren an beliebigen Orten unter wirtschaftlichen Bedingungen möglich ist.

Gelöst wird diese Aufgabe durch den Einsatz einer Anlage mit den Merkmalen des Patentanspruchs 1. Vorteilhafte Weiterbildungen der Erfindung sind in den Unteransprüchen 2 bis 17 näher gekennzeichnet. Die Grundidee der Erfindung liegt darin, eine Anlage zur Herstellung von Rippenrohren in Form von mobilen, also leicht transportierbaren Teilmodulen auszubilden, die ohne großen Aufwand in kürzester Zeit (z.B. 2 - 3 Tage) zu einer funktionsfähigen Gesamtanlage aufgestellt werden können, ohne daß größere Anforderungen an die vorhandene Infrastruktur am Produktionsort gestellt werden müssen. Die zur Herstellung der Rippenrohre unbedingt notwendigen Hauptaggregate der Anlage (Dreheinrichtung, Bandzuführung und Verbindungsaggregat) sind in einem oder mehreren mobilen containerförmigen Modulen jeweils in produktionsbereiter Zuordnung zueinander installiert. Vorzugsweise ist die Kerneinheit mit den Hauptaggregaten Dreheinrichtung, Bandzuführung und Verbindungsaggregat in einem einzigen containerartigen Gehäuse (z.B. Abmessungen eines 6m-Normcontainers) untergebracht. Dies wäre bei Anwendung des heute üblichen Bauprinzips mit linear bewegtem Drehfutter für die Dreheinrichtung bei Anlagen zur Herstellung von Rohren mit aufgeschweißten Rippen allein schon wegen des hohen Gewichts und der Abmessungen des Maschinenbetts kaum sinnvoll zu bewerkstelligen gewesen und hätte zumindest zu drastischen Beschränkungen in der herstellbaren Rohrlänge gefuhrt, da die größten Normcontainer etwa nur 12 m lang sind. Durch die Auswahl einer Dreheinrichtung, die über von außen an das Rohr angreifende Rollen die Schraubenlinienbewegung erzwingen und dabei aber in Richtung der Rohrachse ortsfest bleiben, konnte eine in axialer Richtung sehr kurze Bauweise der Anlage erreicht werden, ohne daß hinsichtlich der herstellbaren Rohrlängen Grenzen bestehen.

Nachfolgend wird die Erfindung anhand des in den Figuren dargestellten Ausführungsbeispiels näher beschrieben. Es zeigen:
- Figur 1: eine perspektivische Ansicht einer erfindungsgemäßen Anlage,
- Figur 2: das Schema einer Dreheinrichtung und
- Figur 3: eine abgewandelte Ausführung einer erfindungsgemäßen Anlage.

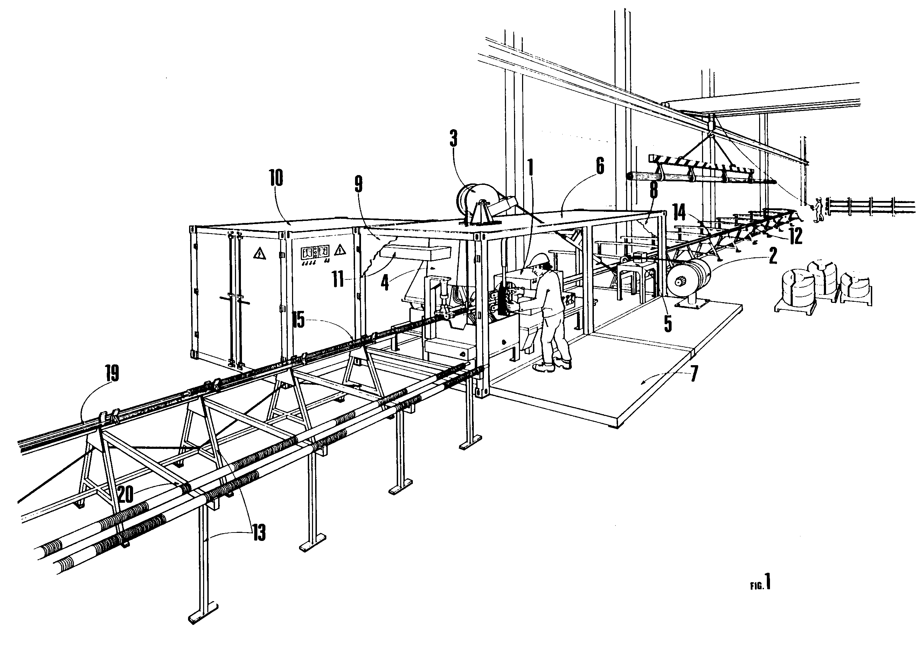

Im Mittelpunkt der erfindungsgemäßen Anlage der Figur 1 steht das containerartige Gehäuse 6, das im Hinblick auf seine Tragfähigkeit abgestimmt ist auf die in ihm angeordneten Einzelaggregate, wobei berücksichtigt ist, daß zumindest die Seitenwände der beiden Stirnseiten 8, 9 und die Wand 7 auf einer der beiden Breitseiten abnehmbar oder zumindest großflächig zu öffnen sind. Der Boden des Containers 6 hat ersatzweise die Funktion eines Maschinenfundaments und stellt eine begehbare Arbeitsfläche für das Bedienungspersonal dar. Dies gilt im dargestellten Beispiel auch für die ausklappbare Wand 7, die mit dem Containerboden eine ebene Fläche bildet. Es reicht daher aus, den Boden für den Arbeitsbereich der Anlage in einfacher Weise zu glätten. Als wesentliche Einzelaggregate sind am Boden des Containers linear hintereinander eine Dreheinrichtung 1 und ein als HF-Schweißeinrichtung 4 ausgebildetes Verbindungsaggregat für die Verbindung der Rippen mit dem Rohr befestigt. Anstelle einer HF-Schweißeinrichtung 4 könnte auch eine andere Schweißeinrichtung oder beispielsweise auch eine Walzeinrichtung vorgesehen sein, insbesondere bei Rippen aus Aluminium oder Kupfer, die einen festen Sitz der Rippen auf der Rohroberfläche bewirkt. Auch eine Löteinrichtung könnte hierfür eingesetzt werden. Bei Rippenrohren aus Stahl ist jedoch das HF-Schweißen deutlich bevorzugt, da es eine sichere Beherrschung des Schweißprozesses und einen vergleichsweise geringen Energieeintrag in das Wärmetauscherrohr ermöglicht. Die Dreheinrichtung 1 ist ortsfest angeordnet und ist vorzugsweise nach dem vorstehend bereits beschriebenen Prinzip gemäß Figur 2 ausgebildet. Ergänzend ist lediglich zu bemerken, daß die Zahl der Rollen 17 und 18 mindestens jeweils drei beträgt und daß als Rollenwerkstoffe insbesondere verschleißfeste Eisenwerkstoffe und gegebenenfalls auch formbeständige harte Kunststoffe in Frage kommen. Die Zuführung des Flachmaterials für die Rippen kann beispielsweise von der Seite her erfolgen, wobei das Flachmaterial in einem stumpfen Winkel (vielfach in der Nähe von 90°) zur Rohrachse geführt wird. Bevorzugt wird jedoch eine Zuführung von oben, wie sie in Figur 1 dargestellt ist, da dann der Arbeitsraum im Bereich der HF-Schweißeinrichtung 4 am wenigsten beeinträchtigt wird. Als besonders zweckmäßig ist es anzusehen, die Umlenkrolle 3 über der Verbindungszone, in der die Befestigung der Rippen auf dem Rohr 14 bewerkstelligt wird, auf einem ausschwenkbaren Klappmechanismus (nicht dargestellt) an der Dachfläche des Containers 6 anzubringen, so daß die Umlenkrolle 3 während des Transports im Inneren des Containers 6 geschützt ist und zur Inbetriebnahme der Anlage lediglich nach außen geschwenkt werden muß. Der Vorrat an Flachmaterial für die Rippen wird in Form von schmalen Bandrollen oder vorzugsweise in Form von kreuzweise gewickelten Coils an die Anlage gebracht und über eine Coilvorrichtung 2 abgehaspelt. Kreuzweise gewickelte Coils haben gegenüber schmalen Bandrollen den großen Vorteil, daß deutlich größere Mengen (ca. 1 - 2 t) je Coil bereitgestellt werden können und dadurch die Notwendigkeit zur Verbindung mit einem fast verbrauchten Coil im Produktionsprozeß nur etwa einmal je Schicht besteht. Hierzu wird eine einfache Stumpfschweißmaschine 5 eingesetzt, die ebenfalls im Container 6 am Boden fest installiert ist, aber selbstverständlich auch separat beigestellt werden kann. Die Verwendung der größeren kreuzweise gewickelten Coils bringt den großen Vorteil mit sich, daß die sonst üblichen bauaufwendigen und störanfälligen Bandspeicheranlagen zur stillstandsfreien Überbrückung der Coilwechselzeiten vollständig entfallen können, weil aufgrund der seltenen Coilwechsel diese Stillstandszeit ohne weiteres toleriert werden kann. Dies gilt insbesondere für den Fall, daß die Coilvorrichtung 2, wie dargestellt, als schwenkbare Doppelhaspel ausgebildet ist. Diese erlaubt während der Abspulung des Arbeitscoils bereits die Beladung mit einem Vorratscoil. Bei Verbrauch des Arbeitscoils wird die Doppelhaspel um eine vertikale Achse um 180° gedreht, so daß das Vorratscoil in Arbeitsposition kommt. Figur 2 zeigt, daß die Coilvorrichtung vorzugsweise fest auf der abklappbaren Wand 7 der Längsseite des Containers 6 montiert ist.

Die Stromversorgung für die HF-Schweißmaschine 4 mit den erforderlichen Steuer- und Regeleinrichtungen ist in einem separaten Container 10 untergebracht und stellt somit eine ebenfalls leicht zu transportierende Einheit dar, die im Bedarfsfall entlang der zweiten Längsseite des Containers 6 aufgestellt werden kann. Der Container 6 weist Koppeleinrichtungen (z.B. im Bereich des Kabelkanals 11) auf, über die die erforderlichen Leitungsverbindungen herstellbar sind. Die Schalter und Stelleinrichtungen zur Einstellung der Schweißmaschine und der Antriebe der Mechanik sind, wie bildlich angedeutet, selbstverständlich im eigentlichen Arbeitsraum des Containers 6 angeordnet. Neben den Anschlüssen für die HF-Stromversorgung und die sonstige Stromversorgung sind auch Anschlußeinrichtungen für Hilfsstoffe (z.B. Kühlwasser oder Druckluft) am Container 6 vorgesehen.

Die Beschickung der im Container 6 untergebrachten Kerneinheiten der Anlage z.B. mit glatten Kesselrohren 14, die mit Rippen versehen werden sollen, erfolgt über ein Glattrohrbett 12, das sich frei stehend an die hintere offene Stirnfläche 8 des Containers 6 anschließt. In entsprechender Weise schließt sich zur Aufnahme der fertigen Rippenrohre 15 an die vordere Stirnfläche 9 ein Rippenrohrbett 13 an. Das Glattrohrbett 12 und das Rippenrohrbett 13 sind vorzugsweise als Leichtbaukonstruktionen (z.B. aus Vierkantrohren geschweißt) erstellt und im wesentlichen baugleich ausgeführt. Daher wird nachfolgend nur auf das Rippenrohrbett exemplarisch näher eingegangen. Es ist gebildet aus einer Vielzahl von im Abstand zueinander angeordneten und starr aber lösbar miteinander verbundenen bockartigen Grundelementen. Diese tragen an der linken Längsseite eine Rohrrinne 19, die das sich schraubenlinienförmig aus dem Container 6 herausbewegende Rippenrohr 15 aufnimmt. Diese Rohrrinne 19 kann z.B. mit Kunststoffplatten ausgelegt sein. Nach rechts hin schließen sich seitliche Tragarme 20 an, die etwa horizontal oder leicht flach geneigt verlaufen, so daß die fertigen Rippenrohre gegen einen Anschlag am Ende der Tragarme 20 rollen können. Bei dem Glattrohrbett 12 können solche Anschläge entfallen, da wegen der umgekehrten Transportrichtung zweckmäßig auch die Neigung der Tragarme umgekehrt eingestellt wird. Die beiden Rohrbetten 12, 13 weisen zweckmäßigerweise, abgesehen von einem einfachen Hebelmechanismus als Auswerfer bzw. als Vereinzelungseinrichtung, keinerlei drehende Teile auf und sind daher nicht nur kostengünstig herstellbar sondern auch wartungsarm und im Bedarfsfall mit einfachsten Mitteln reparierbar.

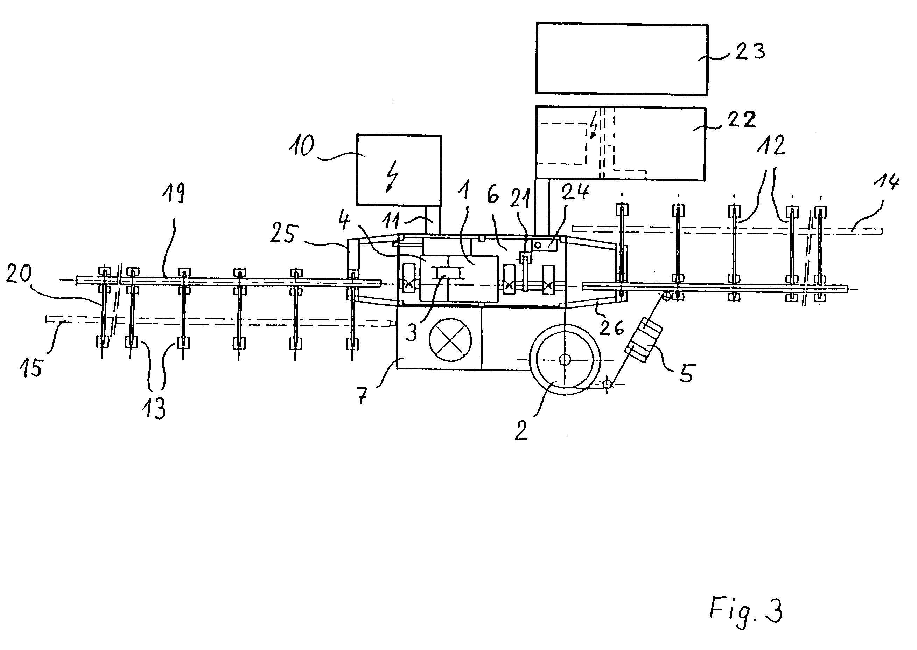

Fig. 3 zeigt in einem schematischen Grundriß eine erfindungsgemäße Anlage, die weitgehend mit der Darstellung in Fig. 1 übereinstimmt. Funktionsgleiche Teile sind daher mit denselben Bezugszeichen versehen und brauchen nicht erneut erläutert zu werden. Im Unterschied zu Fig. 1 ist die Stumpfschweißeinrichtung 5 außerhalb des Containers 6 angeordnet, wobei entlang der Rohrzufuhrrinne des Glattrohrbetts 12 mittels Umlenkrollensystemen eine Bandspeichereinrichtung für das einzusetzende Stahlband angeordnet sein kann. Im Bereich der beiden Stirnseiten 8, 9 des Containers 6 ist jeweils ein ausklappbarer oder anschraubbarer Ausrichtrahmen 25, 26 montiert, der es auf einfache Weise erlaubt, die beiden Rohrbetten 12, 13 in Richtung der Rohrachse der durchlaufenden Rohre möglichst exakt und schnell auszurichten. Mit dem Bezugszeichen 24 ist eine optionale Einrichtung zur Druckluftversorgung bezeichnet.

Da die eingesetzten Glattrohre 14 in der Regel nicht bereits mit metallisch reiner Oberfläche angeliefert werden können, ist es vorteilhaft, den Container 6 zusätzlich auch noch mit einer einfachen Reinigungseinrichtung (z.B. Bandschmirgeleinrichtung 21) zu beschicken. Diese wird zweckmäßig in der Nähe der Stirnseite 8 aufgestellt, so daß die einlaufenden Rohre 14 sich an der Reinigungseinrichtung schraubenlinienförmig vorbeibewegen und so auf der gesamten Oberfläche leicht gereinigt werden können.

Sofern am Ort der Aufstellung der erfindungsgemäßen Anlage eine unzureichende Infrastruktur vorliegt, kann die Anlage durch weitere modulartig in Containerbauweise ausgeführte Einheiten ergänzt werden. Dies gilt insbesondere für die Versorgung mit Kühlwasser. Die dazu erforderlichen Aufbereitungseinrichtungen können in einem separaten Container untergebracht werden und auf einfachste Weise über die vorhandenen Anschlußeinrichtungen mit dem Container 6 verbunden werden. Im Falle von Frischwassermangel kann diese Einheit auch als Kühlanlage mit geschlossenem Kühlwasserkreislauf ausgeführt sein.

In entsprechender Weise können weitere Container 22, 23 beigestellt werden, die Einrichtungen zur Qualitätskontrolle und/oder Verpackungs- und Versandeinrichtungen und/oder Instandhaltungseinrichtungen und/oder Büro- und Verwaltungseinrichtungen zur organisatorischen Führung der Anlage beinhalten. Es ist auch möglich, ein containerförmiges Modul vorzusehen, in dem eine Schneideeinrichtung installiert ist, mit der das Band für die Rippen in Querrichtung in kurzen Abständen eingeschnitten wird, um Rippenrohre mit gezackten Rippen (serrated fins) herzustellen. Ein solches Modul könnte beispielsweise im hinteren Teil auf den Container 6 (vor der Umlenkrolle 3) aufgesetzt werden.

Die erfindungsgemäße Anlage ermöglicht es, ohne großen Investitionsaufwand und ohne umfangreiche Vorbereitungsarbeiten in kürzester Zeit eine Rippenrohrproduktion an beliebigen Orten durchzuführen. Diese Anlage ist einfach aufgebaut und leicht transportierbar, da sie problemlos in Normcontainern verladen werden kann bzw. die Hauptaggregate bereits mit den Außenabmessungen derartiger Container konzipiert sind. Sie ist weitgehend mit angelerntem Personal betreibbar und erfordert nur eine minimale Anzahl von ausgebildeten Fachkräften. Dennoch kann eine Produktionsqualität gewährleistet werden, wie sie bei normaler industrieller Fertigung üblich ist. Ein wesentlicher Vorteil ist auch in einer Minimierung des Transportaufwandes für die Rippenrohre zu sehen, die etwa den doppelten Durchmesser wie die glatten Rohre aufweisen und folglich ein wesentlich größeres Volumen einnehmen. Hinzu kommt die Vermeidung von Transportschäden, wenn die Rippenrohrproduktion bereits an dem Ort erfolgt, wo diese Rohre weiter verarbeitet werden sollen (z.B. bei einem Kesselbauer oder auf einer Kraftwerksbaustelle). Durch die Erfindung wird es erstmals möglich, auch in Ländern mit einem nur "sporadischen" Markt für Rippenrohre die Produktion dieser Rohre vor Ort in wirtschaftlicher Weise durchzuführen, wobei problemlos als Einsatzmaterialien (Glattrohre, Rippenmaterial) auf etwa vorhandene heimische Produkte zurückgegriffen werden kann. Der Einsatz einer solchen Anlage ist auch am Ort eines etablierten Rippenrohrherstellers sinnvoll, um beispielsweise kurzfristige Bedarfsspitzen, die den Investitionsaufwand einer fest installierten herkömmlichen Anlage nicht rechtfertigen würden, abzudecken. Auf diese Weise lassen sich sonst immer wieder vorkommende Probleme hinsichtlich gesetzter zu kurzer Lieferfristen ohne weiteres lösen. Eine solche mobile Anlage kann z.B. geleast werden und steht in kürzester Zeit zur Produktion zur Verfügung, ohne daß risikoreiche Investitionsaufwendungen getätigt werden müßten.

## Patentansprüche

1. Anlage zur Herstellung von metallischen Wärmetauscherrohren mit schraubenlinienförmig auf der äußeren Oberfläche befestigten Wärmetauschrippen (Rippenrohre 15) aus glatten Rohren (14) und streifenförmigem Flachmaterial für die Rippen mit
- einem Glattrohrbett (12) für die Zuführung glatter Rohre (14),
- einer Dreheinrichtung (1) zur Erzeugung einer schraubenlinienförmigen Relativbewegung zwischen dem glatten Rohr (14) und dem Flachmaterial, wobei die Dreheinrichtung (1) ortsfest angeordnet und in der Weise ausgebildet ist, daß die schraubenlinienförmige Bewegung des glatten Rohres (14) motorisch mittels mehrerer radial zur Rohrachse anstellbarer Rollen (17, 18) aufgezwungen wird,
- einer stumpfwinklig zur Rohrachse gerichteten Bandzuführung für das Flachmaterial zum glatten Rohr (14),
- einem Verbindungsaggregat zur Herstellung einer festen Verbindung des auf das Rohr (14) aufgewickelten Flachmaterials und
- einem Rippenrohrbett (13) für die Abführung der erzeugten Rippenrohre (15),
dadurch gekennzeichnet,
- daß die Anlage aus mobilen, leicht transportierbaren Teilmodulen gebildet ist, wobei mindestens die zur Herstellung der Rippenrohre (15) notwendigen Hauptaggregate (Dreheinrichtung 1, Bandzuführung, Verbindungsaggregat) der Anlage in einem oder mehreren mobilen containerförmigen Modulen jeweils in produktionsbereiter Zuordnung zueinander installiert sind.

2. Anlage nach Anspruch 1,
dadurch gekennzeichnet,
- daß die Dreheinrichtung (1), die Bandzuführung und das Verbindungsaggregat in einem mobilen, containerförmigen Gehäuse (6) angeordnet sind,
- daß die Seitenwände der beiden Stirnseiten (8, 9) des Gehäuses (6) abnehmbar sind für den Anschluß des Glattrohrbetts (12) und des Rippenrohrbetts (13),
- daß mindestens eine Wand (7) an den beiden Längsseiten des Gehäuses (6) großflächig geöffnet werden kann und
- daß das Gehäuse (6) mit Anschlußeinrichtungen für die Zu- und Ableitung von Antriebsenergie und Hilfsstoffen versehen ist.

3. Anlage nach Anspruch 1 oder 2,
dadurch gekennzeichnet,
daß das Verbindungsaggregat als HF-Schweißeinrichtung (4) ausgebildet ist.

4. Anlage nach Anspruch 3,
dadurch gekennzeichnet,
daß die Stromversorgung für die HF-Schweißeinrichtung (4) in einem zweiten containerförmigen Behälter (10) angeordnet ist, der an der der Wand (7) gegenüberliegenden Längsseite aufgestellt und mit den entsprechenden Anschlußeinrichtungen des Behälters (6) koppelbar ist.

5. Anlage nach einem der Ansprüche 1 bis 4,
dadurch gekennzeichnet,
daß die Wand (7) in der Weise nach außen abklappbar ist, daß sie mit dem Boden des Gehäuses (6) eine ebene, begehbare Arbeitsfläche bildet.

6. Anlage nach Anspruch 5,
dadurch gekennzeichnet,
daß die Bandzuführung eine Coilvorrichtung (2) und eine Umlenkrolle (3) aufweist, wobei die Coilvorrichtung (2) auf der Innenseite der abklappbaren Wand (7) und die Umlenkrolle (3) an der Dachfläche des Gehäuses (6) befestigt sind.

7. Anlage nach Anspruch 6,
dadurch gekennzeichnet,
daß die Umlenkrolle (3) an der Innenseite der Dachfläche auf einem Klappmechanismus angeordnet ist und zur Inbetriebnahme aus dem Gehäuse (6) nach außen ausschwenkbar ist.

8. Anlage nach einem der Ansprüche 6 bis 7,
dadurch gekennzeichnet,
daß im Gehäuse (6) eine Stumpfschweißeinrichtung (5) zur Verbindung einzelner Teillängen des Flachmaterials angeordnet ist.

9. Anlage nach einem der Ansprüche 1 bis 8,
dadurch gekennzeichnet,
daß die Rollen (17, 18) für die Erzeugung der schraubenlinienförmigen Bewegung des Rohres (14) in einem um die Rohrachse rotierbaren Käfig (16) gelagert sind.

10. Anlage nach Anspruch 9,
dadurch gekennzeichnet,
daß eine Gruppe von Rollen (17) vorgesehen ist, die frei um ihre jeweilige Drehachse rotieren und lediglich die Rotationsbewegung des Käfigs (16) auf das Rohr (14) übertragen, und eine zweite Gruppe von Rollen (18) im Sinne der linearen Bewegungskomponente der Schraubenlinienbewegung des Rohres (14) motorisch angetrieben ist, wobei die Drehzahlen der Käfigrotation und der Rollen (18) zueinander einstellbar, insbesondere stufenlos einstellbar sind.

11. Anlage nach einem der Ansprüche 1 bis 10,
dadurch gekennzeichnet,
daß in dem Gehäuse (6) in der Nähe der dem Glattrohrbett (12) zugewandten Stirnseite (8) ein Schmirgelaggregat zur Reinigung der Oberfläche des Rohres (14) angeordnet ist.

12. Anlage nach einem der Ansprüche 1 bis 11,
dadurch gekennzeichnet,
daß das Rippenrohrbett (13) als Leichtkonstruktion aus einer Mehrzahl untereinander gleicher und miteinander starr, aber lösbar gekoppelter bockartiger Grundelemente gebildet ist, wobei an einer Längsseite eine Rohrrinne (19) angeordnet ist, an die sich etwa horizontal oder flach geneigt sich seitlich erstreckende Tragarme (20) anschließen.

13. Anlage nach Anspruch 12,
dadurch gekennzeichnet,
daß das Glattrohrbett (12) in seinen Grundelementen im wesentlichen baugleich wie das Rippenrohrbett (13) ausgeführt ist.

14. Anlage nach einem der Ansprüche 6 bis 13,
dadurch gekennzeichnet,
daß die Coilvorrichtung (2) als schwenkbare Doppelhaspel für ein Arbeitscoil und ein Vorratscoil ausgebildet ist.

15. Anlage nach einem der Ansprüche 1 bis 14,
dadurch gekennzeichnet,
daß in einem separaten containerförmigen Behälter Einrichtungen zur Kühlwasseraufbereitung, insbesondere in Form eines Kühlwasserkreislaufs, vorgesehen sind, die mit den entsprechenden Anschlußeinrichtungen des Behälters (6) koppelbar sind.

16. Anlage nach einem der Ansprüche 1 bis 15,
dadurch gekennzeichnet,
daß weitere containerförmige Behälter (22, 23) vorgesehen sind für die Unterbringung
einer Schneideinrichtung für gezackte Rippen und/oder
eines verbrennungsmotorisch angetriebenen Stromerzeugungsaggregats und/oder
von Qualitätskontrolleinrichtungen und/oder
von Verpackungs- und Versandeinrichtungen und/oder
von Instandhaltungseinrichtungen und/oder
von Büro- und Verwaltungseinrichtungen.

17. Anlage nach einem der Ansprüche 2 bis 16,
dadurch gekennzeichnet,
daß an den beiden Stirnseiten (8, 9) des Gehäuses (6) jeweils ein ausklappbarer oder anschraubbarer Ausrichtungsrahmen (25, 26) zur exakten Ausrichtung des Glattrohrbetts (12) bzw. des Rippenrohrbetts (13) in Vorschubrichtung der Wärmetauscherrohre vorgesehen ist.

## Claims

1. Plant for the production of metallic heat exchanger tubes with helical heat-exchange fins attached to their outer surface (finned tubes 15), from smooth tubes (14) and strips of flat material for the fins, with
- a smooth tube bed (12) for the run-in of smooth tubes (14)
- a rotating device (1) to produce a helical relative movement between the smooth tube (14) and the flat material, such that the rotating device (1) is in a fixed position and is so designed that the helical movement of the smooth tube (14) is motor-driven via a number of rolls (17, 18) radially adjustable with respect to the axis of the tube,
- a strip feeder device to feed the flat material to the smooth tube (14) at an obtuse angle with respect to the tube axis,
- a joining unit to produce a permanent joint between the tube (14) and the flat material wound around it, and
- a finned tube bed (15) for the run-out of the finned tubes (15) so produced,
characterized in that
the plant consists of mobile and easily transportable modular parts, such that at least the main units required for the production of the finned tubes (15) (rotating device 1, strip feeder, joining unit) of the plant are installed, in one or more mobile container-type modules, each in relation to the others such that production can take place.

2. Plant according to Claim 1,
characterized in that
- the rotating device (1), the strip feeder and the joining unit are arranged in a mobile, container-type housing (6),
- the side walls of the two end-faces (8, 9) are removable to allow connection of the smooth tube bed (12) and the finned tube bed (13),
- at least one wall along the two longitudinal sides of the housing (6) can be opened to expose a large area, and
- the housing (6) is fitted with connection devices for the supply and disconnection of drive energy and auxiliary materials.

3. Plant according to Claims 1 or 2,
characterized in that
the joining unit consists of a HF welding device (4).

4. Plant according to Claim 3,
characterized in that
the power supply for the HF welding device (4) is arranged in a second container-type housing (10), which is positioned on the longitudinal side opposite the wall (7), and can be coupled to the corresponding connection devices of the housing (6).

5. Plant according to any of Claims 1 to 4,
characterized in that
the wall (7) is hinged to swing down and outwards, such that together with the bottom of the housing (6), it forms a flat working surface that can be walked on.

6. Plant according to Claim 5,
characterized in that
the strip feeder comprises a coil device (2) and a deflector roll (3), such that the coil device (2) is attached to the inside of the hinged wall (7) and the deflector roll (3) is attached to the roof surface of the housing (6).

7. Plant according to Claim 6,
characterized in that
the deflector roll (3) is fitted on a swivelling mechanism attached to the inside of the roof, and can be swivelled out of the housing (6) for operation.

8. Plant according to either of Claims 6 or 7,
characterized in that
in the housing (6) there is a butt-welding device (5) for joining together successive lengths of the flat material.

9. Plant according to any of Claims 1 to 8,
characterized in that
the rolls (17, 18) that produce the helical movement of the tube (14) are mounted in a cage (16) which can rotate about the tube axis.

10. Plant according to Claim 9,
characterized in that
a group of rolls is provided, which rotate freely about their respective rotation axes and only transfer the rotary movement of the cage (16) to the tube (14), and a second group of rolls (18) is motor-driven in the direction of the linear component of the helical movement of the tube (14), such that the rotation speeds of the cage and the rolls (18) are adjustable, in particular continuously adjustable, with respect to one another.

11. Plant according to any of Claims 1 to 10,
characterized in that
in the housing (6), close to the end-face (8) towards the smooth tube bed (12), there is an abrasion unit to clean the surface of the tube (14).

12. Plant according to any of Claims 1 to 11,
characterized in that
the finned tube bed (13) is a lightweight structure consisting of a number of similar trestle-type base elements solidly but detachable coupled together, along one longitudinal side of which there is a tube channel (19) from which supporting arms (20) extend to the side horizontally or at a slight inclination.

13. Plant according to Claim 12,
characterized in that
the base elements of the smooth tube bed (12) are of a structure essentially similar to those of the finned tube bed (13).

14. Plant according to any of Claims 6 to 13,
characterized in that
the coil device (2) is designed as a tilting double-spool for a working coil and a standby coil.

15. Plant according to any of Claims 1 to 14,
characterized in that
in a separate container-type housing, equipment for cooling water preparation is provided, particularly in the form of a cooling water circuit, which can be coupled to the corresponding connection devices of the housing (6).

16. Plant according to any of Claims 1 to 15,
characterized in that
further container-type housings (22, 23) are provided for the accommodation of
a cutting device for serrated fins, and/or
an internal-combustion engine driven power generator, and/or
quality control equipment, and/or
packaging and dispatch equipment, and/or
maintenance equipment, and/or
office and administration equipment.

17. Plant according to any of Claims 2 to 16,
characterized in that
to each of the tow end-faces (8, 9) of the housing (6) is fitted an alignment frame (25, 26) that can be swung out or bolted on, to enable exact alignment of the smooth tube bed (12) and the finned tube bed (13) along the feed direction of the heat-exchanger tubes.

## Revendications

1. Installation pour fabriquer des tubes métalliques d'échangeur de chaleur, ayant des ailettes d'échange thermique fixées de façon hélicoïdale sur la surface externe (tubes à ailettes 15), à partir de tubes lisses (14) et d'un matériau plat en forme de bande pour les ailettes, comportant :
- un banc de tubes lisses (12) pour l'amenée de tubes lisses (14),
- un dispositif rotatif (1) pour engendrer un mouvement relatif hélicoïdal entre le tube lisse (14) et le matériau plat, le dispositif rotatif (1) étant agencé de façon stationnaire et étant réalisé de sorte que le mouvement hélicoïdal du tube lisse (14) est imposé, de façon motorisée, au moyen de plusieurs rouleaux (17,18) réglables radialement par rapport à l'axe du tube,
- une amenée de bande orientée sous un angle obtus par rapport à l'axe du tube pour le matériau plat vers le tube lisse (14),
- un appareil de liaison pour réaliser une liaison fixe du matériau plat enroulé sur le tube (14), et
- un banc de tubes à ailettes (13) pour l'évacuation des tubes à ailettes (15) engendrés,
caractérisée en ce que l'installation est formée à partir de modules partiels mobiles facilement transportables, au moins les appareils principaux nécessaires pour la fabrication des tubes à ailettes (15) (dispositif rotatif 1, amenée de bande, appareil de liaison) de l'installation étant installés l'un par rapport à l'autre dans un ou plusieurs modules en forme de conteneur mobiles, à chaque fois, de façon coordonnée prête à la production.

2. Installation selon la revendication 1,
caractérisée en ce que :
- le dispositif rotatif (1), l'amenée de bande et l'appareil de liaison sont agencés dans un boîtier mobile (6) en forme de conteneur,
- les parois latérales des deux faces frontales (8,9) du boîtier (6) peuvent être retirées pour le raccordement du banc de tubes lisses (12) et du banc de tubes à ailettes (13),
- au moins une paroi (7) sur les deux côtés longitudinaux du boîtier (6) peut être ouverte sur une grande surface, et
- le boîtier (6) est muni de dispositifs de raccordement pour l'amenée et l'évacuation de l'énergie d'entraînement et de matières consommables.

3. Installation selon la revendication 1 ou 2,
caractérisée en ce que l'appareil de liaison est réalisé comme un dispositif de soudage à hautes fréquences (4).

4. Installation selon la revendication 3,
caractérisée en ce que l'alimentation en courant pour le dispositif de soudage à hautes fréquences (4) est agencée dans un second réceptacle (10) en forme de conteneur, qui est agencé sur le côté longitudinal opposé à la paroi (7) et peut être couplé aux dispositifs de raccordement correspondants du boîtier (6).

5. Installation selon une des revendications 1 à 4,
caractérisée en ce que la paroi (7) peut être basculée vers l'extérieur, de sorte qu'elle forme, avec le fond du boîtier (6), une surface de travail mobile plane.

6. Installation selon la revendication 5,
caractérisée en ce que l'amenée de bande présente un dispositif de bobinage (2) et un rouleau de renvoi (3), le dispositif de bobinage (2) étant fixé sur la face interne de la paroi (7) pouvant basculer et le rouleau de renvoi (3) sur la surface de toit du boîtier (6).

7. Installation selon la revendication 6,
caractérisée en ce que le rouleau de renvoi (3) est agencé sur la face interne de la surface de toit sur un mécanisme basculant et, pour la mise en service, peut être pivoté vers l'extérieur hors du boîtier (6).

8. Installation selon une des revendications 6 à 7,
caractérisée en ce qu'un dispositif de soudage bout à bout (5) pour relier des longueurs partielles individuelles du matériau plat est agencé dans le boîtier (6).

9. Installation selon une des revendications 1 à 8,
caractérisée en ce que les rouleaux (17,18) pour engendrer le mouvement hélicoïdal du tube (14) sont montés dans une cage (16) pouvant tourner autour de l'axe du tube.

10. Installation selon la revendication 9,
caractérisée en ce qu'un groupe de rouleaux (17) est prévu, qui tournent librement autour de leur axe de rotation respectif et transmettent uniquement le mouvement de rotation de la cage (16) sur le tube (14), et un second groupe de rouleaux (18) est entraîné de façon motorisée dans le sens des composantes linéaires du mouvement hélicoïdal du tube (14), les vitesses de rotation de la cage et des rouleaux (18) pouvant être réglées les unes par rapport aux autres, en particulier de façon continue.

11. Installation selon une des revendications 1 à 10,
caractérisée en ce qu'un appareil de polissage pour nettoyer la surface du tube (14) est agencé dans le boîtier (6) à proximité de la face frontale (8) en regard du banc de tubes lisses (12).

12. Installation selon une des revendications 1 à 11,
caractérisée en ce que le banc de tubes à ailettes (13) est formé comme construction légère constituée d'une pluralité d'éléments de base, du type support, identiques les uns aux autres et couplés les uns aux autres de façon rigide mais amovible, une goulotte pour tube (19) étant agencée sur un côté longitudinal, à laquelle se raccordent des bras de support (20) s'étendant latéralement de façon inclinée sensiblement horizontalement ou à plat.

13. Installation selon la revendication 12,
caractérisée en ce que le banc de tubes lisses (12) est réalisé, en ce qui concerne ses éléments de base, essentiellement de la même façon que le banc de tubes à ailettes (13).

14. Installation selon une des revendications 6 à 13,
caractérisée en ce que le dispositif de bobinage (2) est réalisé comme treuil double pivotant pour un bobinage de travail et un bobinage de réserve.

15. Installation selon une des revendications 1 à 14,
caractérisée en ce que, dans un réceptacle séparé en forme de conteneur, sont prévus des dispositifs pour préparer de l'eau de refroidissement, en particulier sous forme d'un circuit d'eau de refroidissement, lesquels peuvent être couplés aux dispositifs de raccordement correspondants du boîtier (6).

16. Installation selon une des revendications 1 à 15,
caractérisée en ce que d'autres réceptacles (22,23) en forme de conteneur sont prévus pour recevoir un dispositif de coupe pour des ailettes dentelées et/ou un appareil engendrant du courant entraîné par un moteur à combustion interne et/ou des dispositifs de contrôle de qualité et/ou des dispositifs d'emballage et d'expédition et/ou des dispositifs de maintenance et/ou des dispositifs de bureau et de gestion.

17. Installation selon une des revendications 2 à 16,
caractérisée en ce que, sur les deux faces frontales (8,9) du boîtier (6), il est prévu, à chaque fois, un bâti d'orientation (25,26) pouvant être vissé ou basculé pour l'orientation exacte du banc de tubes lisses (12) ou du banc de tubes à ailettes (13) dans la direction d'avance des tubes d'échangeur de chaleur.
